# EUROPEAN PATENT SPECIFICATION

(11) **EP 1 099 630 B1**
(45) Date of publication and mention of the grant of the patent: **18.08.2004**
(21) Application number: 00309715.1
(22) Date of filing: 02.11.2000
(51) Int. Cl.: B64D 41/00, B64D 27/00, H02J 4/00

(54) **Power supply system for an aircraft**
Energieversorgungssystem für Flugzeug
Système d'alimentation en énergie pour aéronef

(30) Priority: 08.11.1999 GB 9926354
(43) Date of publication of application: 16.05.2001
(73) Proprietor: ROLLS-ROYCE plc, London, SW1E 6AT (GB)
(72) Inventor: Hill, Jason Edward, Derby, DE24 8BJ (GB); Brown, John David, Derby, DE24 8BJ (GB)
(74) Representative: Skinner, Michael Paul

(56) References cited:
- DE-A- 19 745 747
- US-A- 5 594 285
- US-A- 5 936 318
- BEAUCHAMP E D: "Aircraft electrical power systems" PROCEEDINGS OF THE IEEE 1985 NATIONAL AEROSPACE AND ELECTRONICS CONFERENCE NAECON 1985 (CAT. NO. 85CH2189-9), DAYTON, OH, USA, 20-24 MAY 1985, pages 1527-1535, XP000974008 1985, New York, NY, USA, IEEE, USA
- TENNING CARL B: "Evolution of the Boeing 777 electrical power system" PROCEEDINGS OF THE 27TH INTERSOCIETY ENERGY CONVERSION ENGINEERING CONFERENCE;SAN DIEGO, CA, USA AUG 3-7 1992, vol. 2, 1992, pages 455-460, XP002163541 Proc Intersoc Energy Convers Eng Conf;Proceedings of the Intersociety Energy Conversion Engineering Conference; Aerospace Power 1992 Publ by IEEE, Piscataway, NJ, USA
- HYVARINEN W E: "Design consideration for application of high voltage dc electric power systems to aircraft" 1970 PROCEEDINGS OF THE NATIONAL AEROSPACE ELECTRONICS CONFERENCE, DAYTON, OH, USA, 18-20 MAY 1970, pages 342-348, XP000983278 1970, New York, NY, USA, IEEE, USA
- TAYLOR ED ET AL: "Use of high voltage direct current in aircraft electrical systems. A navy perspective" AEROSPACE TECHNOLOGY CONFERENCE AND EXPOSITION;LONG BEACH, CA, USA SEP 23-26 1991, 1991, pages 1-11, XP000974150 SAE Tech Pap Ser;SAE Technical Paper Series 1991 Publ by SAE, Warrendale, PA, USA
- MALDONADO M A: "POWER MANAGEMENT AND DISTRIBUTION SYSTEM FOR A MORE-ELECTRIC AIRCRAFT (MADMEL)-PROGRAM STATUS" PROCEEDINGS OF THE INTERSOCIETY ENERGY CONVERSION ENGINEERING CONFERENCE (IECEC),US,NEW YORK, IEEE, vol. CONF. 30, 30 July 1995 (1995-07-30), pages 13-18, XP000730657 ISBN: 0-7803-2771-3
- WEIMER JOSEPH A: "Power management and distribution for the more electric aircraft" PROCEEDINGS OF THE 1995 30TH INTERSOCIETY ENERGY CONVERSION ENGINEERING CONFERENCE, IECEC. PART 1 (OF 3);ORLANDO, FL, USA JUL 30-AUG 4 1995, vol. 1, 1995, pages 273-277, XP000730685 Proc Intersoc Energy Convers Eng Conf;Proceedings of the Intersociety Energy Conversion Engineering Conference; Aerospace Power 1995 IEEE, Piscataway, NJ, USA
- WEIMER J A: "ELECTRIAL POWER TECHNOLOGY FOR THE MORE ELECTRIC AIRCRAFT" PROCEEDINGS OF THE AIAA/IEEE DIGITAL AVIONICS SYSTEMS CONFERENCE,US,NEW YORK, IEEE, vol. CONF. 12, 25 October 1993 (1993-10-25), pages 445-450, XP000451697
- FEINER L J: "POWER ELECTRONICS TRANSFORMS AIRCRAFT SYSTEMS" WESCON CONFERENCE,US,IEEE CENTER, HOES LANE, 27 September 1994 (1994-09-27), pages 166-171, XP000532574 ISSN: 1044-6036

## Description

The present invention relates to power supply systems for aircraft.

A modem aircraft will contain many systems which require power, such as systems for control and navigation, and systems providing services for passengers or crew, such as galleys, lighting, heating etc. Power for these systems is conventionally drawn from the engines or from auxiliary power units (APUs). Some of the power consumers will require electrical power, others will require pneumatic or hydraulic power. Accordingly, an airframe will include a complex loom of electric wiring and of pneumatic and hydraulic pipes, in order to provide a connection between each power consumer and an appropriate power source. This loom contributes to the mass of the airframe to a significant degree, exacerbated by the need for duplication and redundancy within the system, for resistance to faults etc.

The present invention provides a power supply system for an aircraft comprising a plurality of power generators and a plurality of power consumers, the power supply system comprising connection means operable to deliver power from the power generators to the power consumers, and characterised in that the connection means comprise a transmission circuit to which at least two power generators provide power, during use, for transmission around the aircraft by the transmission circuit, the transmission circuit, in use, transmitting power in a format which is different to the format in which at least one power generator generates power, and there being conversion means associated with the different format power generator, operable to provide conversion of power from the format in which power is generated to the format in which power is transmitted, and further characterised by at least one distribution arrangement operable to draw power, during use, from the transmission circuit and to distribute the power to one or more power consumers, the format in which power is required by each power consumer being different to the format in which the transmission circuit transmits power, in use, there being conversion means associated with the or each distribution arrangement, operable to provide conversion of power from the format in which power is transmitted, to the format in which power is required by each power consumer, the format of power transmission over the transmission circuit being thereby independent of the format required by any of the power consumers.

Preferably the transmission circuit is electrical, and preferably transmission is at a voltage higher than required by any power consumer. The voltage may be DC in the range from about 500 volts to about 1500 volts or higher, and may be, for example, about 750 volts. Alternatively, the transmission may be AC, preferably at high frequency, preferably in excess of 1 kilohertz and at high voltage.

Preferably at least one power consumer is hydraulic, the conversion means incorporating means to convert power from the format transmitted by the transmission circuit, to hydraulic power for use by the hydraulic power consumer. There may be at least one power consumer which is pneumatic, the conversion means incorporating means to convert power from the format transmitted by the transmission circuit, to pneumatic power for use by the pneumatic power consumer.

There may be at least one power generator which is hydraulic or electrical or pneumatic. At least one power generator is preferably a gas turbine engine.

The connection means may further comprise a plurality of transmission circuits connected to provide redundancy of connections between the power generators and the power consumers.

Preferably each power generator and each power consumer is connected to at least two transmission circuits. Switch means are preferably provided, by which power generators and power consumers may be selectively connected to more than one transmission circuit. The switch means may allow at least a section of the transmission circuit to be isolated in the event of a fault. Preferably the switch means are operable to provide load shedding.

Storage means may be provided for storing and releasing energy received from the transmission circuit.

The invention also provides an aircraft having a power supply system as aforesaid.

Embodiments of the present invention will now be described in more detail, by way of example only, and with reference to the accompanying drawings, in which:-
Fig. 1 is a schematic diagram illustrating the various components of a power supply system according to the present invention; and
Fig. 2 is a schematic diagram of a system according to the invention, installed in an airframe.

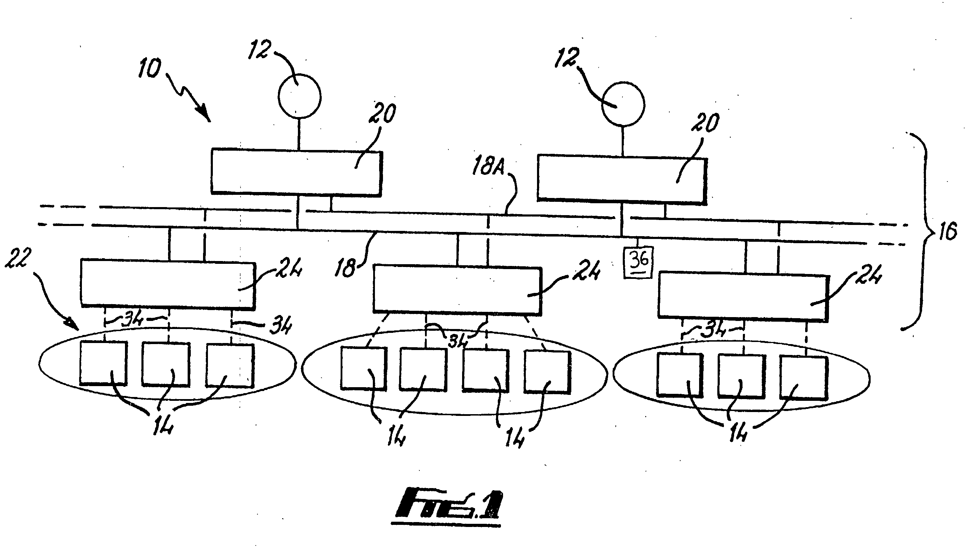

Fig. 1 illustrates a power supply system 10 for an aircraft. The aircraft has a plurality of power generators 12, which would normally be engines or APUs. Power consumers 14 are located at various positions around the aircraft and may be, for example, aircraft control systems, aircraft navigation systems, or services for passengers or crew, such as galleys, lighting, heating etc.

A connection arrangement indicated generally at 16 is provided to deliver power from the generators 12 to the consumers 14. The connection arrangement 16 includes a transmission circuit 18 to which at least two generators 12 are connected to provide power for transmission around the vessel by the transmission circuit 18. The generators 12 are shown connected to the transmission circuit 18 by means of conversion circuits 20, which will be described in more detail below, and may be optional.

Several distribution arrangements illustrated generally at 22 are also connected to the transmission circuit 18, again through conversion circuits 24. The distribution arrangements 22 draw power from the transmission circuit 18 and distribute that power to one or more power consumers 14.

The transmission circuit 18 forms the principal feature of the system 10. The transmission circuit 18 may extend throughout the airframe, to or near every region in which consumers 14 are located, or alternatively, the transmission circuit 18 may transmit power around only part of the airframe. However, the transmission circuit 18 is used to transmit power around the airframe in a format which enhances the efficiency of the transmission, and independently of the format in which power is required by the consumer. In a particularly preferred arrangement, the transmission circuit 18 will transmit power in an electrical format, acting as a bus and preferably transmitting electrical power in the form of a high voltage DC format. A DC voltage in the range from about 500 volts to 1500 volts, such as about 750 volts, is considered advantageous to provide efficient power transmission along the circuit 18. Other DC voltages, particularly high voltages could be used. Alternatively, the transmission circuit 18 could be operated at AC, preferably at high voltage and high frequency (such as 1kHz or above), but other frequency and voltage choices could be made when designing the transmission characteristics of the circuit 18.

The power transmitted by the circuit 18 is provided to it by the generators 12. The power generators 12 may provide electrical power. If they provide DC power, this may be required to be stepped up or down to the transmission voltage on the circuit 18 by incorporating appropriate circuits within the conversion circuits 20. Alternatively, the generators 12 may produce power in an AC format, in which case the corresponding conversion circuit 20 would be required to rectify the AC output of the power generator 12, to convert the power format to the high voltage DC format on the circuit 18. Furthermore, if the power format on the circuit 18 was to be high frequency, high voltage AC electrical power, the conversion circuits 20 would again incorporate an appropriate electrical conversion circuit to convert between the electrical power format produced by the generator 12, and that required by the circuit 18. The nature of these conversion circuits will be conventional in themselves, well understood by the skilled reader.

Furthermore, the power generators 12 need not be electrical in form. They may, for instance, be generators of hydraulic or pneumatic power, such as hydraulic or pneumatic pumps. Nevertheless, these fluid power generators will be connected to the transmission circuit 18 by means of appropriate conversion circuits 20 which will incorporate arrangements for converting power from hydraulic or pneumatic formats to the electrical format required by the transmission circuit 18.

It can therefore be understood from the above description that generators 12 of electrical, hydraulic or pneumatic power of many different formats (such as voltages, frequencies, pressures etc.) can all be connected to a common transmission circuit 18 by means of appropriate conversion circuits 20 in order that the power produced by the generators 12 is transmitted around the airframe in a common and efficient format, by means of the transmission circuit 18.

It is to be understood that while it is preferred that the transmission circuit 18 is electrical, particularly for reasons of efficiency, the circuit 18 could in principle be hydraulic or pneumatic. Electrical, hydraulic and pneumatic generators 12 could nevertheless still be connected to the circuit 18, by means of appropriate conversion circuits 20.

Thus, the use of conversion circuits between power generators and the circuit 18 is preferred, for various reasons. The generators can be of a wide variety of forms, including electric, pneumatic and hydraulic, allowing the efficiency of generation of power to be optimised in particular operating conditions by appropriate choice of the format in which power is generated. However, the efficiency of generation is substantially independent of the efficiency of transmission, the latter being dependent on the power format utilised by the circuit 18, so that these efficiencies can be optimised substantially independently, so long as appropriate conversion circuits are available, which is not expected to be a practical concern.

Conversion circuits would not be required if a generator provided power in the format required by the circuit 18, but we expect that in practice, conversion will usually be required in order to optimise the overall efficiency of the system.

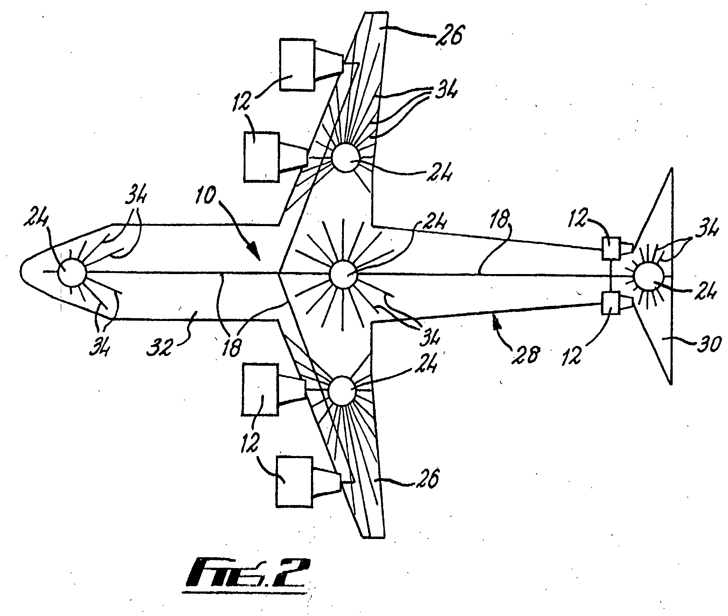

Fig. 2 illustrates the physical layout of power generators 12 and a transmission circuit 18 of the type just described. In this example, four of the power generators 12 are gas turbine engines mounted on the wings 26 of the airframe 28. Conversion circuits 20 are not shown in Fig. 2, for simplicity. A further two power generators 12 are APUs mounted in the tail 30 of the airframe 28. The transmission circuit 18 is illustrated extending along both wings 26, along the whole length of the fuselage 32, and to the tail-mounted APUs 12, in order to transmit the power generated by the generators 12 throughout the airframe 28.

Other power generators could be, for example, fuel cells, batteries or emergency generators such as ram air turbines.

It is to be borne in mind that Fig. 2 is schematic only. In a real airframe 28, additional branches of the circuit 18 may be required in order to provide power transmission to all locations at which power is required. It should also be borne in mind that for reasons of clarity, conversion circuits 20 have been omitted from Fig. 2, the generators 12 being shown directly coupled to the circuit 18.

The arrangements provided above therefore allow several power generators to generate power in an appropriate manner, to be fed to a common transmission circuit 18 for transmission around the airframe 28. The use of a common circuit 18 allows the power demand to be shared by the generators 12, so that any change in the demand can be shared among the generators 12 or borne by any one or more of them and in particular, may be borne by a selection of them chosen to maximise the efficiency of power generation. By allowing power generation efficiency to be improved in this way, the invention is expected to allow a reduction in the mass of power generating equipment required within the airframe 28. The efficiency of power generation is further enhanced by the design of the transmission circuit 18 to transmit the power efficiently around the airframe 28.

Having fully described the manner of power generation and transmission, it is now appropriate to describe the manner of use of that power, primarily by reference to the lower part of Fig. 1. In Fig. 1, power consumers 14 are shown grouped in diagrammatic fashion. In a real implementation of the invention, power consumers 14 would be grouped by their location and by the format in which they require power. Thus, the cockpit region of the airframe 28 will contain one or more groups of electrical power consumers. The wings 26 may incorporate one or more groups of electrical, hydraulic or pneumatic power consumers (control systems, flaps, landing gear etc.). The main cabin will incorporate groups of electrical power consumers (such as lighting) and hydraulic power consumers (such as pumps in galleys and toilets etc.). The skilled reader will be aware of many other power consumers within an airframe 28. It will be apparent in the light of the teaching above, how these may be grouped according to location and required power format.

A conversion circuit 24 is associated with each group of power consumers 14. The conversion circuit 24 is able to draw power from the transmission circuit 18, i.e. to take power in the format by which the transmission circuit 18 transmits power through the airframe 28. This power is converted within the conversion circuit 24 into a format appropriate for the corresponding group of power consumers 14. Thus, if the corresponding group of power consumers 14 are electrical, the power will be converted to an appropriate voltage level and to DC or an appropriate AC frequency, before being distributed to the consumers 14 by means of a connection 34 between each consumer 14 and the corresponding conversion circuit 24.

In the event that the consumers 14 of the group are hydraulic or pneumatic, the corresponding conversion circuit 24 will incorporate an appropriate hydraulic or pneumatic pump or the like, to convert power from the format of the transmission circuit 18, to an appropriate hydraulic or pneumatic format (taking into account pressure and the like), for distribution to the consumers 14 by appropriate pipework forming the connection 34.

It is particularly advantageous that the invention allows different types of consumers (electric, hydraulic, pneumatic) to be powered from a common circuit 18. Thus, while power transmission around the airframe is likely, in many cases, to be in an electrical format in the interests of efficiency, the conversion circuits allow the format of power consumption to be selected as appropriate, so that control surface actuators can be controlled hydraulically, as is conventional; pneumatic power can be used for engine starting, as is also conventional; and electric power need not be used in relation to fuel pumps and fuel tanks, in the interests of safety.

Again turning to Fig. 2, a physical implementation of these arrangements can be described, again greatly simplified for clarity. Fig. 2 shows a conversion circuit 24 in the cockpit region of the fuselage, another in each wing, one centrally within the main cabin, and a further conversion circuit 24 in the tail. These conversion circuits 24 are located in the vicinity of an appropriate group of consumers 14 (not shown in Fig. 2). Connections 34 fan out from each conversion circuit 24, to distribute the power drawn by the conversion circuit 24 from the transmission circuit 18, to the consumers 14. Appropriate grouping of consumers and location of conversion circuits minimises losses associated with power distribution from the conversion circuits to the consumers.

Returning to Fig. 1, the reader's attention is now drawn to a second transmission circuit 18A shown connected in parallel with the transmission circuit 18 to each of the power generators 12, by means of the appropriate conversion circuits 20. The transmission circuit 18A is shown to illustrate schematically how redundancy can be incorporated within the transmission arrangements, in the interests of safety and reliability. The transmission circuit 18A is also connected to each of the conversion circuits 24. In this example, safety and reliability are enhanced by simple duplication of the transmission circuit 18 by the circuit 18A, but in more sophisticated arrangements, multiple redundancy could be provided. For example, four parallel circuits could be provided, to create a quadruplex redundant system. In a preferred arrangement, a multiple redundant arrangement (such as a quadruplex system) would be used to distribute power throughout the airframe, but the degree of redundancy used for each item of plant could be selected individually for that plant. Thus, critical systems such as aileron actuators, would be able to draw power from any of the parallel circuits, to provide maximum redundancy for them. Less critical systems, such as galleys and cabin entertainment systems could be connected to only two of the parallel circuits, as less redundancy is required. In an alternative, the circuits 18,18A could be divided into sections or branches, each provided with redundancy to the level required, and with appropriate switching arrangements being incorporated within the conversion circuits 20,24 in order to connect generators 12, consumers 14, transmissions circuits 18 (or parts of them) and conversion circuits 20,24 into or out of circuit as required by operating conditions, particularly as required by the occurrence of faults. Many specific arrangements for implementing transmissions arrangements with adequate redundancy can be envisaged within the broad scope of the present invention as described above.

The arrangements described above are expected to be advantageous in a number of ways, as follows. First, all power used within the airframe 28 can be transmitted around the airframe by the common circuit 18, regardless of whether the eventual power consumer 14 requires electrical, pneumatic or hydraulic power, and this transmission can be in a format which enhances the efficiency of transmission. This results in a simpler loom of power connections within the airframe 18, which is expected to give rise to a weight saving, there being a further weight saving expected from the power generators 12, in view of their more efficient utilisation. Reliability of the overall power system is expected to be enhanced, but safety and redundancy can readily be built in, to any desired degree. The use of redundancy in the transmission arrangements in the form of parallel systems would allow power to be fed to a particular consumer by more than one route, so that in the event of a fault occurring in any one route, power may nevertheless be delivered by an alternative route. The efficiency with which the power generators 12 are used can be enhanced by ensuring that those units which are most efficient are used all of the time, with peaks in demand being met by the other generators.

The power system described above may incorporate a control system of the type described in the European patent application EP-A-1102439.

Reliability and efficiency of power generation can be further enhanced by connecting an energy storage arrangement (36) to the transmission circuit 18, in order to store energy when surplus energy is being generated, and to release that energy when instantaneous demand exceeds the instantaneous generation level.

The invention is expected to be advantageous in view of the importance in aircraft design of considerations such as weight, complexity and reliability.

## Claims

1. A power supply system (10) for an aircraft (28) comprising a plurality of power generators (12) and a plurality of power consumers (14), the power supply system comprising connection means (16) operable to deliver power from the power generators to the power consumers, wherein the connection means comprise a transmission circuit (18) to which at least two power generators provide power, during use, for transmission around the aircraft by the transmission circuit, the transmission circuit, in use, transmitting power in a format which is different to the format in which at least one power generator generates power, and there being conversion means (20) associated with the different format power generator, operable to provide conversion of power from the format in which power is generated to the format in which power is transmitted, and wherein at least one distribution arrangement (22) is operable to draw power, during use, from the transmission circuit and to distribute the power to one or more power consumers, **characterised in that** the format in which power is required by each power consumer is different to the format in which the transmission circuit transmits power, in use, there being conversion means (24) associated with the or each distribution arrangement, operable to provide conversion of power from the format in which power is transmitted, to the format in which power is required by each power consumer, the format of power transmission over the transmission circuit being thereby independent of the format required by any of the power consumers.

2. A system (10) according to claim 1, **characterised in that** the transmission circuit (18) is electrical.

3. A system (10) according to claim 2, **characterised in that** transmission is at a voltage higher than required by any power consumer (14).

4. A system (10) according to claim 3, **characterised in that** the transmission voltage is DC in the range from about 500 volts to about 1500 volts or higher.

5. A system (10) according to claim 4, **characterised in that** the DC voltage is about 750 volts.

6. A system (10) according to claim 2 or 3, **characterised in that** the transmission is at AC.

7. A system (10) according to claim 6, **characterised in that** the transmission is at high frequency.

8. A system (10) according to claim 7, **characterised in that** the transmission is at a frequency in excess of 1 kilohertz.

9. A system (10) according to claims 7 or 8, **characterised in that** the transmission is at high voltage

10. A system (10) according to any preceding claim, **characterised in that** at least one power consumer (14) is hydraulic, the conversion means (24) incorporating means to convert power from the format transmitted by the transmission circuit (18), to hydraulic power for use by the hydraulic power consumer.

11. . A system (10) according to any preceding claim, **characterised in that** at least one power consumer (14) is pneumatic, the conversion means (24) incorporating means to convert power from the format transmitted by the transmission circuit (18), to pneumatic power for use by the pneumatic power consumer.

12. A system (10) according to any preceding claim, **characterised in that** at least one power generator (12) is hydraulic or electrical or pneumatic.

13. A system (10) according to any preceding claim, **characterised in that** at least one power generator (12) is a gas turbine engine.

14. A system (10) according to any preceding claim, **characterised in that** the connection means (16) further comprise a plurality of transmission circuits (18, 18A) connected to provide redundancy of connections between the power generators (12) and the power consumers (14).

15. A system (10) according to claim 14, **characterised in that** each power generator (12) and each power consumer (14) is connected to at least two transmission circuits (18, 18A).

16. A system (10) according to claim 15, **characterised in that** switch means are provided (20, 24), by which power generators (12) and power consumers (14) may be selectively connected to more than one transmission circuit (18, 18A).

17. A system (10) according to claim 16, **characterised in that** the switch means (20, 24) allow at least a section of the transmission circuit (18, 18A) to be isolated in the event of a fault.

18. A system (10) according to claim 16 or 17, **characterised in that** the switch means (20, 24) are operable to provide load shedding.

19. A system (10) according to any preceding claim, **characterised in that** storage means (36) are provided for storing and releasing energy received from the transmission circuit (18).

20. An aircraft (28) **characterised by** having a power supply system (10) according to any preceding claim.

## Patentansprüche

1. Energie-Versorgungssystem (10) für ein Flugzeug (28) mit einer Vielzahl von Energie-Generatoren (12) und einer Vielzahl von Energie-Verbrauchern (14), wobei das Energie-Versorgungssystem Verbindungsmittel (16) aufweist, die betätigbar sind, um Energie von den Energie-Generatoren den Energie-Verbrauchern zuzuführen, wobei die Verbindungsmittel einen Übertragungskreis (18) aufweisen, dem mindestens zwei Energie-Generatoren während des Betriebs Energie zuführen zur Übertragung in dem Flugzeug mittels des Übertragungskreises, wobei der Übertragungskreis im Betrieb Energie in einem Format überträgt, das sich von dem Format unterscheidet, in welchem zumindest ein Energie-Generator Energie erzeugt, und wobei Umwandlungsmittel (20) vorhanden sind, die dem Energie-Generator mit unterschiedlichem Format zugeordnet sind und betätigbar sind, um für eine Umwandlung der Energie zu sorgen von dem Format, in dem Energie erzeugt wird, zu dem Format, in dem Energie übertragen wird, und wobei mindestens eine Verteilungsanordnung derart betätigbar ist, dass sie im Betrieb von dem Übertragungskreis Energie zieht und die Energie zu einem oder mehreren Energie-Verbrauchern verteilt, **dadurch gekennzeichnet, dass** das Format, in dem Energie von jedem Energie-Verbraucher benötigt wird, sich von dem Format unterscheidet, in dem der Übertragungskreis im Betrieb Energie überträgt, wobei Umwandlungsmittel (24) vorhanden sind, die der oder jeder Verteilungsanordnung zugeordnet sind und betätigbar sind, um für eine Umwandlung der Energie zu sorgen von dem Format, in dem Energie übertragen wird, zu dem Format, in dem Energie von jedem Energie-Verbraucher benötigt wird, wobei das Format der Energie-Übertragung über den Übertragungskreis dabei unabhängig von dem Format ist, das von irgendeinem der Energie-Verbraucher benötigt wird.

2. System (10) nach Anspruch 1, **dadurch gekennzeichnet, dass** der Übertragungskreis (18) elektrisch ist.

3. System (10) nach Anspruch 2, **dadurch gekennzeichnet, dass** die Übertragung bei einer höheren als der von irgend einem Energie-Verbraucher (14) benötigten Spannung erfolgt.

4. System (10) nach Anspruch 3, **dadurch gekennzeichnet, dass** die Übertragungsspannung eine Gleichspannung im Bereich von etwa 500 Volt bis etwa 1.500 Volt oder höher ist.

5. System (10) nach Anspruch 4, **dadurch gekennzeichnet, dass** die Gleichspannung etwa 750 Volt beträgt.

6. System (10) nach Anspruch 2 oder 3, **dadurch gekennzeichnet, dass** die Übertragung mit Wechselspannung erfolgt.

7. System (10) nach Anspruch 6, **dadurch gekennzeichnet, dass** die Übertragung bei einer hohen Frequenz erfolgt.

8. System (10) nach Anspruch 7, **dadurch gekennzeichnet, dass** die Übertragung bei einer Frequenz von mehr als 1 Kilohertz erfolgt.

9. System (10) nach Anspruch 7 oder 8, **dadurch gekennzeichnet, dass** die Übertragung bei einer hohen Spannung erfolgt.

10. System (10) nach einem der vorhergehenden Ansprüche, **dadurch gekennzeichnet, dass** mindestens ein Energie-Verbraucher (14) hydraulisch ist, wobei die Umwandlungsmittel (24) Mittel enthalten zum Umwandeln von Energie von dem durch den Übertragungskreis (18) übertragenen Format in hydraulische Energie zur Verwendung durch den hydraulischen Energie-Verbraucher.

11. System (10) nach einem der vorhergehenden Ansprüche, **dadurch gekennzeichnet, dass** mindestens ein Energie-Verbraucher (14) pneumatisch ist, wobei die Umwandlungsmittel (24) ein Mittel enthalten zum Umwandeln von Energie von dem durch den Übertragungskreis (18) übertragenen Format in pneumatische Energie zur Verwendung durch den pneumatischen Energie-Verbraucher.

12. System (10) nach einem der vorhergehenden Ansprüche, **dadurch gekennzeichnet, dass** mindestens ein Energie-Generator (12) hydraulisch oder elektrisch oder pneumatisch ist.

13. System (10) nach einem der vorhergehenden Ansprüche, **dadurch gekennzeichnet, dass** mindestens ein Energie-Generator (12) ein Gasturbinen-Motor ist.

14. System (10) nach einem der vorhergehenden Ansprüche, **dadurch gekennzeichnet, dass** die Verbindungsmittel (16) außerdem eine Vielzahl von Übertragungskreisen (18, 18A) aufweisen, die derart geschaltet sind, dass sie eine Redundanz an Verbindungen zwischen den Energie-Generatoren (12) und den Energie-Verbrauchern (14) erzeugen.

15. System (10) nach Anspruch 14, **dadurch gekennzeichnet, dass** jeder Energie-Generator (12) und jeder Energie-Verbraucher (14) mit mindestens zwei Übertragungskreisen (18, 18A) verbunden ist.

16. System (10) nach Anspruch 15, **dadurch gekennzeichnet, dass** Schaltermittel vorgesehen sind (20, 24), mittels derer Energie-Generatoren (12) und Energie-Verbraucher (14) mit mehr als einem Übertragungskreis (18, 18A) selektiv verbunden werden können.

17. System (10) nach Anspruch 16, **dadurch gekennzeichnet, dass** die Schaltermittel (20, 24) ermöglichen, zumindest einen Abschnitt des Übertragungskreises (18, 18A) im Falle eines Fehlers zu isolieren.

18. System (10) nach Anspruch 16 oder 17, **dadurch gekennzeichnet, dass** die Schaltermittel (20, 24) betätigbar sind, um einen Lastabwurf zu bewirken.

19. System (10) nach einem der vorhergehenden Ansprüche, **dadurch gekennzeichnet, dass** Speichermittel (36) vorgesehen sind zum Speichern und Abgeben von Energie, die von dem Übertragungskreis (18) empfangen wird.

20. Flugzeug (28), **dadurch gekennzeichnet, dass** es ein Energie-Versorgungssystem (10) gemäss einem der vorhergehenden Ansprüche besitzt.

## Revendications

1. Système d'alimentation en énergie (10) pour aéronef (28), comprenant une pluralité de générateurs d'énergie (12) et une pluralité de consommateurs d'énergie (14), le système d'alimentation en énergie comprenant des moyens de connexion (16) utilisables pour délivrer de l'énergie des générateurs d'énergie aux consommateurs d'énergie, dans lequel les moyens de connexion comprennent un circuit de transmission (18) auquel au moins deux générateurs d'énergie fournissent de l'énergie, en cours d'utilisation, à transmettre à travers l'aéronef par le circuit de transmission, le circuit de transmission, en cours d'utilisation, transmettant de l'énergie sous une forme qui est différente de la forme sous laquelle au moins un générateur d'énergie génère de l'énergie, et des moyens de conversion (20) étant associés au générateur d'énergie de forme différente, utilisables pour assurer la conversion de l'énergie de la forme sous laquelle- l'énergie est générée à la forme sous laquelle l'énergie est transmise, et dans lequel au moins un agencement de distribution (22) est utilisable pour prélever de l'énergie, en cours d'utilisation, à partir du circuit de transmission et pour distribuer l'énergie à un ou plusieurs consommateurs d'énergie, **caractérisé en ce que** la forme sous laquelle l'énergie est demandée par chaque consommateur d'énergie est différente de la forme sous laquelle le circuit de transmission transmet de l'énergie, en cours d'utilisation, des moyens de conversion (24) étant associés audit ou à chaque agencement de distribution, utilisables pour assurer la conversion de l'énergie de la forme sous laquelle l'énergie est transmise à la forme sous laquelle l'énergie est demandée par chaque consommateur d'énergie, la forme de transmission d'énergie par le circuit de transmission étant ainsi indépendante de la forme demandée par l'un quelconque des consommateurs d'énergie.

2. Système (10) selon la revendication 1, **caractérisé en ce que** le circuit de transmission (18) est électrique.

3. Système (10) selon la revendication 2, **caractérisé en ce que** la transmission s'effectue à une tension supérieure à celle demandée par un consommateur d'énergie (14) quelconque.

4. Système (10) selon la revendication 3, **caractérisé en ce que** la tension de transmission est du courant continu dans la plage d'environ 500 volts à environ 1500 volts ou plus.

5. Système (10) selon la revendication 4, **caractérisé en ce que** la tension de courant continu est d'environ 750 volts.

6. Système (10) selon la revendication 2 ou 3, **caractérisé en ce que** la transmission s'effectue par courant alternatif.

7. Système (10) selon la revendication 6, **caractérisé en ce que** la transmission s'effectue à haute fréquence.

8. Système (10) selon la revendication 7, **caractérisé en ce que** la transmission s'effectue à une fréquence supérieure à 1 kilohertz.

9. Système (10) selon la revendication 7 ou 8, **caractérisé en ce que** la transmission s'effectue à haute tension.

10. Système (10) selon l'une quelconque des revendications précédentes, **caractérisé en ce qu'**au moins un consommateur d'énergie (14) est hydraulique, les moyens de conversion (24) comprenant des moyens pour convertir l'énergie de la forme transmise par le circuit de transmission (18) en énergie hydraulique pour une utilisation par le consommateur d'énergie hydraulique.

11. Système (10) selon l'une quelconque des revendications précédentes, **caractérisé en ce qu'**au moins un consommateur d'énergie (14) est pneumatique, les moyens de conversion (24) intégrant des moyens pour convertir l'énergie de la forme transmise par le circuit de transmission (18) en énergie pneumatique pour une utilisation par le consommateur d'énergie pneumatique.

12. Système (10) selon l'une quelconque des revendications précédentes, **caractérisé en ce qu'**au moins un générateur d'énergie (12) est hydraulique ou électrique ou pneumatique.

13. Système (10) selon l'une quelconque des revendications précédentes, **caractérisé en ce qu'**au moins un générateur d'énergie (12) est une turbine à gaz.

14. Système (10) selon l'une quelconque des revendications précédentes, **caractérisé en ce que** les moyens de connexion (16) comprennent en outre une pluralité de circuits de transmission (18, 18A) reliés pour assurer une redondance de connexions entre les générateurs d'énergie (12) et les consommateurs d'énergie (14).

15. Système (10) selon la revendication 14, **caractérisé en ce que** chaque générateur d'énergie (12) et chaque consommateur d'énergie (14) est relié à au moins deux circuits de transmission (18, 18A).

16. Système (10) selon la revendication 15, **caractérisé en ce que** des moyens de commutation (20, 24) sont prévus, par lesquels les générateurs d'énergie (12) et les consommateurs d'énergie (14) peuvent être reliés de façon sélective à plus d'un circuit de transmission (18, 18A).

17. Système (10) selon la revendication 16, **caractérisé en ce que** les moyens de commutation (20, 24) permettent l'isolation d'au moins une section du circuit de transmission (18, 18A) en cas de défaillance.

18. Système (10) selon la revendication 16 ou 17, **caractérisé en ce que** les moyens de commutation (20, 24) sont utilisables pour assurer un délestage.

19. Système (10) selon l'une quelconque des revendications précédentes, **caractérisé en ce que** des moyens de stockage (36) sont prévus pour stocker et libérer l'énergie reçue du circuit de transmission (18).

20. Aéronef (28), **caractérisé en ce qu'**il comprend un système d'alimentation en énergie (10) selon l'une quelconque des revendications précédentes.
